Europäisches Patentamt

European Patent Office

Office européen des brevets

(19)

(11) Publication number: **0 088 518**
**A1**

# EUROPEAN PATENT APPLICATION

(12)

(21) Application number: **83300610.9**

(51) Int. Cl.³: **A 01 C 11/02**

(22) Date of filing: **08.02.83**

(30) Priority: **11.02.82 GB 8204060**
**17.02.82 GB 8204608**
**24.04.82 GB 8211927**

(43) Date of publication of application: **14.09.83**
**Bulletin 83/37**

(84) Designated Contracting States: **AT BE CH DE FR GB IT LI LU NL SE**

(71) Applicant: **Specialised Harvesting Services Limited, 'This L Do' Coneygarth Lane, Doncaster Lincolnshire (GB)**

(72) Inventor: **Windle, Anthony Barry, 'This L Do' Coneygarth Lane, Haxey Doncaster DN9 2JH (GB)**

(74) Representative: **Oulton, Richard John et al, H.L. Cottrell & Co. 22, Whitefrlargate, Hull North Humberside HU1 2EX. (GB)**

(54) **Planting apparatus.**

(57) The apparatus is of the type comprising a planting device in the form of a rotatable member rotated on forward movement of the apparatus and having means thereon for accepting seedlings from a feed means thereon for accepting seedlings from a feed means for the seedling so as to deposit the seedlings upright on the ground at intervals as the rotatable member rotates: and is characterised in that said means for accepting seedlings (S) comprises a plurality of seedling support channels (16, 19) secured to the rotatable member (11) at angularly displaced positions thereon to lie with their longitudinal axes substantially normal to the axis of rotation of the rotatable member and having in the direction of their longitudinal axes access (17a) to the channels for seedlings such that each channel can receive a seedling therein by orientation of the seedling; said feed means being such as to be able to present seedlings to the rotatable member in the requisite orientation.

- 1 -

"PLANTING APPARATUS"

DESCRIPTION

This invention relates to a planting apparatus and more specifically, to apparatus for transplanting seedlings.

It is well known in the art to grow seedlings in a controlled environment, to establish root and foliage growth, and then to transplant the seedlings in the open in parallel rows to allow the plants to achieve full growth.

The seedlings usually are grown in blocks of nutrient materials, either a block individual thereto or a common block in which case, for transplanting, the common block is broken up to separate the seedlings each with its block individual thereto.

Each seedling must be deposited on the ground with the desired spacing from adjacent seedlings, with the block of the seedling surrounded by soil, and with the seedlings standing erect from the ground, without damage to the root formation or foliage of the seedling. Devices are known, capable of transplanting seedlings, but difficulty has been experienced in operation of the devices.

In one such planting apparatus the seedlings, each with its roots in a nutrient block, are conveyed successively to a planting wheel rotatable about an axis transverse to the direction of planting and engaged with the ground to have a peripheral speed equal to the forward speed of the planting apparatus.  A plough in advance of the planting wheel cuts a trough or furrow to receive the seedlings deposited on the ground by the planting wheel and plough means rearwardly of the planting wheel to fill the furrow so that the block of each seedling is surrounded by soil.

The planting wheel presents a plurality of circumferentially spaced apart ledges, the circumferencial spacing between which at the periphery of the wheel is equal to the pitch required between the seedlings in the row being planted, and each ledge lies in a plane parallel with the axis of the planting wheel.

The seedlings are supplied to the planting wheel by a conveyor which supports the seedlings in a horizontal plane passing through, or adjacent, the axis of the planting wheel and the seedlings are delivered to the ledges forward of the axis of rotation of the planting wheel, the axis of each seedling and its block lying substantially transverse to the direction of the conveyor, and thereby generally parallel to the plane of the planting wheel, and the seedling blocks all being on that side of the conveyor closest to the periphery of the planting wheel.

The conveyor is driven by a drive mechanism from the planting wheel so that the speed of the conveyor is directly related to the rotational speed of the planting wheel and whereby, when operating ideally, a seedling is delivered to each ledge from the forward end of the conveyor immediately after that ledge has passed through the plane of the conveyor.  Each seedling delivered onto a ledge of the planting wheel is conveyed by the planting wheel through the lower forward quadrant of said wheel and is, therefore, delivered to the ground with its block lowermost in a substantially erect position.

Planting apparatus, as described above, is hereinafter referred to as "planting apparatus of the type defined".

The planting wheel comprises a disc with the ledges extending from one face of the disc and it suffers from the following defects.

If the apparatus is subjected to vibration, the seedlings can fall from the side edge of the ledge, resulting in irregular

- 3 -

planting and placing the accidentally lost seedlings in danger of being destroyed by the following ploughs.    This can be counteracted by attaching a "side" to the free edge of the ledge  remote from the disc, whereby each seedling falls into a trough and can discharge therefrom only at the periphery of the planting wheel.

A further difficulty with this planting wheel even when fitted with "sides", arises from the fact that, when planting, the planting wheel is continuously rotating, the conveyor is directly driven by the planting wheel and is therefore continuously displacing seedlings towards the planting wheel and, as the blocks of the seedlings and to a greater extent the foliage of the seedlings differ considerably, there is the danger that the conveyor will deliver two small seedlings between a ledge coming into position to receive its seedlings and the succeeding ledge coming to that position.    If this occurs the two seedlings are planted adjacently and the growth of both plants adversely affected.

This problem could be overcome by extending the sides attached to the ledges in the opposite direction to that of planting wheel rotation thus to hold back the second seedling, so that the planting wheel now has the shape of two parallel discs, connected by the ledges, with that disc adjacent the conveyor having slots through which the plants must pass to the ledges.    However, with a seedling of good foliage development, the block may enter the slot and fall to the ledge whilst the foliage protrudes from the slot and is held by the conveyor, whereupon the trailing edge of the slot can shear the foliage.

An object of the present invention is to provide a planting apparatus avoiding the above-mentioned disadvantages.

According to the present invention there is provided a planting apparatus of said type comprising a planting device in the form of a rotatable member rotated on forward movement of the apparatus and having means thereon for accepting seedlings from a feed means for the seedling so as to deposit the seedlings upright on the ground at intervals as the rotatable member rotates; wherein said means for accepting seedlings comprises a plurality of seedling support channels secured to the rotatable member at angularly displaced positions thereon to lie with their longitudinal axes substantially normal to the axis of rotation of the rotatable member and having in the direction of thier longitudinal axes access to the channels for seedlings such that each channel can receive a seedling therein by orientation of the seedling; said feed means being such as to be able to present seedlings to the rotatable member in the requisite orientation.

The rotatable member may be in the form of a wheel; and in one embodiment of the present invention, the channels are such that the bases thereof lie in planes parallel to or in a diametrical plane of the wheel and extend to the periphery of the wheel, with the channels being open at the periphery of the wheel and the side edge of each channel adjacent the feed means having its upper regions, when the channel is substantially horizontal and has the base thereof directed downwardly, upwardly and outwardly inclined away from the wheel; whereby a seedling is delivered to a planting channel by deposition therein so as to engage and to be deflected by the upper inclined region of the side wall into the planting channel.

Alternatively the planting wheel may comprise a plurality of box-like planting chambers, the axes of which extend generally radially from the rotational axis of the planting wheel and lie in a common plane parallel to the intended direction of planting. The chambers are preferably equally spaced apart circumferentially with respect to the planting wheel, and each member is open at the periphery of the wheel. The access to each chamber may be provided by a slot-like opening thereinto in that side from which a seedling is to be received, which slot-like opening, when in the forward part of the planting wheel, is spaced above the bottom of its associated planting chamber. The upper regions of that wall of each planting chamber, from the bottom of the chamber towards the adjacent edge of the associated slot when in the forward part of the wheel, being deflected towards the feed means, whereupon each seedling in delivery to a chamber is deflected by said deflected upper wall regions away from the feed means and into the planting chamber.

- 5 -

In the planting apparatus using either of the above forms of planting wheel, the feed means feed the seedlings to be substantially parallel with the longitudinal axis of a channel to enter the seedling thereinto from the lateral side of the channel remote from the wheel.

A further disadvantage with the known planting wheel is that the seedlings tend to slide down the ledges to the ground at different radial positions at the ledges giving a non-uniform spacing of the seedlings and also the possiblity that a seedling will not be delivered to the ground in an erect position causing it to fall over and be buried by the following ploughs. Further, if the seedling has good transverse foliage growth it will not be delivered to the ground in the erect position, and again can fall onto its side to be buried by the following ploughs.

Accordingly, the present invention preferably employs an element, adjacent the periphery of the lower forward quadrant of the planting wheel in the direction of planting, arranged to prevent the release of the seedlings from each planting channel in that quadrant as and until the axis of each planting channel is substantially vertical.

Preferably said element comprises an endless band one run of which is engageable by the blocks of seedlings in the lower forward quadrant of the planting wheel and, more preferably, the conveyor band is displaced with the planting wheel so that the run of the conveyor engageable by the seedlings has the same relative speed and direction as the adjacent periphery of the planting wheel.

Thus, by this arrangement, the seedlings are retained with the planting wheel by said element as and until each planting channel bottom supporting a seedling is in a substantially vertical position when, as the said planting channel bottom traverses past the rear regions of the said element, the seedling is delivered to the ground, block first, in a substantially erect position.

A further disadvantage with the known planting apparatus is that, when a seedling is delivered to the ground, the seedling, is wholly unsupported as and until the following ploughs can displace soil around the block.    If the base of the block is not level the seedling can fall onto its side, if the seedling has a transverse foliage growth greater on one side than the other then again the seedling can fall onto its side and, in windy conditions, the seedlings can be blown onto their sides before the following ploughs can pack the block.    Thus, the seedling may be ploughed in by the following ploughs.

A further preferred feature of the present invention therefor is the provision of means for causing soil to be displaced towards the sides of the seedling block, immediately after the seedling has been deposited, thus to support the seedlings until the following plough means pack soil around the block to firmly establish the seedling.

In a preferred embodiment, the said means comprise extensions from the plough cutting the furrow in advance of the planting wheel, said extension extending rearwardly from the plough to a position substantially at or adjacent the vertical axis passing through the rotational axis of the planting wheel, and said extensions serving to support banks of soil displaced by the forward plough so that, at the rear of said extension, said banks of soil collapse inwardly of the furrow to at least partially surround the block of each deposited seedling.

In an alternative arrangement in accordance with the invention the apparatus includes plough means adjacent the lower regions of the planting wheel and arranged to displace soil inwardly to surround the block of each seedling newly delivered to the ground.

In a further form of the present invention, the apparatus comprises an endless conveyor providing a lowermost run to lie, in use of the device, substantially parallel with the ground, means for rotating the conveyor so that the lowermost run passes in the opposite direction to that in which, in use, the device is to be drawn over the ground, a plurality of seedling supports mounted on the conveyor so as to be spaced apart thereon at the spacing required between plants in a row to be planted, and feed means for individually feeding seedlings to the conveyor to deposit one seedling on each support in tuen; the supports being such as to provide a surface extending from the conveyor in the general plane thereof and to lie substantially horizontally at a predetermined position before reaching the lowermost run of the conveyor and to lie substantially vertical whn being carried at the lowermost run of the conveyor, and the feed means feeding seedlings onto said surface of a support at said predetermined position to lie substantially in the general plane of the conveyor with the head of the seedling adjacent the conveyor so that when the seedling is brought to the lowermost run of the conveyor it stands substantially vertical with its head uppermost; means preferably being provided for retaining the seedling on said surface of a support until the latter has been brought to the lowermost run of the conveyor.

Preferably, the seedling supports are such as to leave the base of the seedling exposed and extending from said surface of the support. Conveniently, said surface of a support is provided by a channel of a general U-shape in section and having means at one end for securing the channel to the conveyor; and it is preferred that the support comprise a further member, or lid, to close the channel at the mouth thereof. The lid is preferably resiliently biased to the closed position and comprises a member to strike an abutment to move the lid to open the channel when a seedling is to be deposited therein; the abutment surface being arranged so that once the seedling is deposited in the channel, the said member of the lid leaves contact with the abutment surface to permit the lid again to close. With this arrangement, a further abutment surface is provided at the lower-run of the conveyor partly to open the lid of a support to ensure that a seedling may fall freely out of the channel.

The retaining means may take the form of a leaf spring or other resilient member to bear on the base of the seedling carried in the support. Thus, the lid of the channel of a support may be associated with a leaf spring or other resilient members to bear on the base of the seedling when the lid is closed so as to firmly hold the seedling in place. Alternatively, the retaining means may take the form of a skid plate to extend from a position immediately following said predetermined position to a position immediately before the lowermost run of the conveyor so as to support the base of a seedling should it start to move out of its support in passing from said predetermined position to the lowermost run of the conveyor.

The feed means may comprise an endless conveyor feeding to the planting conveyor at a lateral side thereof, by a rotating paddle wheel with one seedling being received between each two adjacent paddles of the paddle wheel. Preferably, the conveyor of the feeding means and the paddle wheel are stepped - i.e. operated intermittently, in synchronism with the arrival of a plant support at said predetermined position.

The planting conveyor is preferably arranged so that the run thereof on which a seedling is loaded onto a plant support, lies substantially vertical in use of the device and, in one embodiment, the planting conveyor comprises a third run passing obliquely between the lowermost run and the said vertical run.

Operation of the conveyor of the feeding means and of the paddle wheel may be effected by a pneumatic piston and cylinder device; and the timing of the operation of the device may be controlled pneumatically. For instance, an air line may be interrupted by a rotatable member bearing holes disposed around its periphery so that when a hole is aligned with the air line it permits air to pass therethrough but otherwise prevents the flow of air. The rotatable member may be rotated directly or indirectly from the planting conveyor so that a hole in the rotatable member is aligned with the air line each time operation of the pneumatic piston and cylinder device is required; the transmission of air through the air line providing the signal to initiate operation of the device.

As an alternative to side feeding of the rotatable member, end-on feeding may be chosen provided each channel has the side which is to lie uppermost when the seedling is to be delivered to the channel, and its radially outer end, open. In this case the feed conveyor may feed a seedling in an upright position to the open end of the channel and provide means for tipping the seedling to cause it to fall longitudinally into the channel.

Depending on the weather conditions under which the seedlings are transplanted, their associated blocks of nutrient material and the seedlings themselves may hold widely differing quatities of water and this may make it difficult to achieve a reliability in the feed to the rotating member. For instance, the transfer means may comprise a sloping surface intended to guide a seedling onto a plant support of the rotating member. If a seedling with its associated block of nutrient material is relatively dry, it will roll down such a surface quite readily, but if the same surface is used when the seedlings and their associated blocks of nutrient material are wet, sau due to rain, they may only roll off the surface with difficulty. This drawback is not overcome even if the guide surface is bodily rotated so as continuously change its angle of inclination since the dry seedling will roll off at one angular orientation of the guide member whereas a wet seedling will roll off at a different angular orientation. Indeed, in some instances, a wet seedling may adhere to the guide surface so that it only falls off when the guide surface assumes a vertical position.

It is an object of the present invention to provide planting apparatus of the kind defined, comprising a more efficacious form of means for transferring the seedlings from the feed conveyor means to the rotating member.

Accordordingly it provides apparatus of the kind defined, in which the transfer arrangement is intended for side feeding of a channel of a rotatable member, and comprises relatively moving parts, one part providing a seedling support transfer surface; the surface being perforated to be able to receive therethrough another of the relatively moving parts so that the latter dislodges or assists in dislodging any seedling being carried on the surface, thereby to assist transfer of the seedling to a plant support of the rotating member.

The one part of the relatively moving parts may be replicated and the one parts thus provided arranged serially on the feed conveyor each to receive an individual seedling. In this case, the other part may consist of a stationary member located adjacent the discharge end of the conveyor and positioned so that it acts to dislodge or assist the dislodgement of the seedling from the transfer surface when the transfer surface is angled correctly to deposit the seedling onto a plant support of the rotating member. The perforation of the, or each, one part of the relatively moving parts may take the form of slots, for instance, leading in from an edge of the transfer surface, and the other part may comprise elongate members or fingers arranged to pass into the slots to act on a seedling carried on the transfer surface.

Alternatively, the plurality of the one parts may be provided in the form of a paddle wheel rotated in synchronism with the conveyor with each paddle or vane of the paddle wheel constituting a transfer surface. In this case, the other part of the relatively moving parts would be stationed adjacent the paddle wheel and somewhat below the horizontal diametrical plane thereof at the side of the paddle wheel remote from the discharge end of the conveyor. The further part may also itself comprise a guide surface to assist in correctly directing a seedling onto a plant support of the rotating member.

Other objects and advantages of the present invention will become apparent from the following description read in conjunction with the accompanying drawings in which:-

Fig. 1 shows, diagrammatically, a plan view of an apparatus of the type defined, in accordance with the present invention.

Fig. 2 shows a side view of the planting apparatus in the direction of the arrow "A" in Fig. 1.

Fig. 3 shows a partial cross-section on the line II-II in Fig. 1.

Fig. 4 shows, diagrammatically, a side view of a plough extension relative to the lower regions of a planting wheel.

Fig. 5 shows a cross-section on the line III-III in Fig. 4.

Fig. 6 shows an enlarged scale, a side view of the lower regions of the planting wheel assembly of Fig. 2.

Fig. 7 shows, diagrammatically, a second arrangement for delivering the seedlings to the planting wheel and,

Figs. 8A and 8B show, diagrammatically, a third arrangement for delivering the seedlings to the planting wheel.

Fig. 9 is a side elevation of another apparatus according to the present invention, with parts omitted in the interests of clarity.

Fig. 10 is an end elevation of the apparatus of Fig. 9 showing parts omitted from that Figure and,

Fig. 11 is a detail of Fig. 10 showing a modification.

Fig. 12 is a perspective view of part of a further planting apparatus according to the present invention showing the feed means thereof;

Fig. 13 is an end elevation of a still further form of planting apparatus according to the present invention again showing the feed means thereof;

Fig. 14 is a front elevation of parts of the feed means shown in Fig. 13;

Fig. 15 is a perspective view of a further aspect of the present invention; and

Fig. 16 shows an alternative feed arrangement of a planting apparatus according to the present invention.

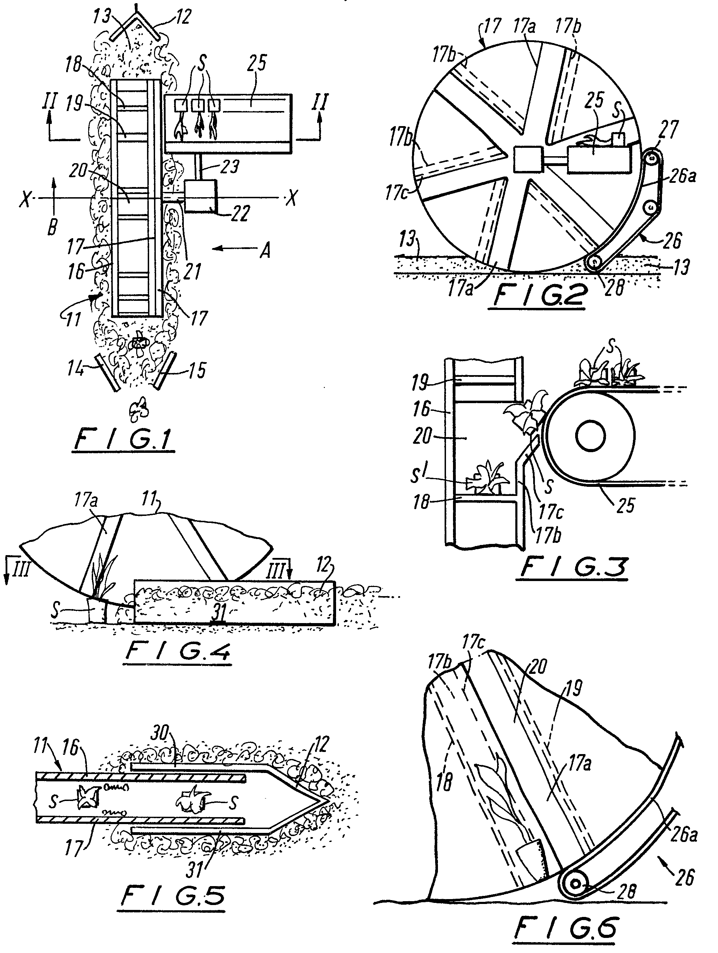

In the arrangement illustrated in Fig. 1 a planting wheel, generally indicated by reference numeral 11, is arranged for rotation about an axis XX, transverse to the intended direction of planting, illustrated by the arrow "B". A plough 12 is advance of the planting wheel 11 cuts a furrow 13, and ploughs 14 and 15 fill the furrow 13 rearwardly of the planting wheel 11.

The planting wheel 11 is rotated at such speed as to have a peripheral displacement equal to the forward displacement displacement of the planting apparatus; conveniently the wheel 11 is a ground engaging wheel, and whereby the lowermost regions of the planting wheel 11 has little, if any, displacement relative to the ground in the direction of planting B.

The planting wheel 11 generally comprises two disc-like side members 16 and 17 in spaced apart parallel relationship, in planes at right angles to the axis XX, connected together by channel bottom plates 18 and channel top plates 19, there being a channel top plate 19 associated with, and individual to, each bottom plate 18.

The channel bottom plates 18 lie in planes generally parallel to the axis XX and are equally spaced apart circumferentially of the wheel 11 and extend to the periphery of wheel 11. Each channel top plate 19 lies parallel with its associated bottom plate 18 and is spaced therefrom in the direction opposite to the direction of rotation of the wheel 11 so that, when each channel bottom plate 18 lies substantially horizontal in the forward regions of the wheel 11, the associated top plate 19 lies above the bottom plate 18 and each channel bottom plate and its associated top plate 19 define a planting chamber 20 between the side member 16 and 17.

The disc-like side member 17 has a plurality of slots 17a therethrough, there being one slot 17a individual to each planting chamber 20, and each slot 17a extends parallel with the axis of its respective planting chamber 20, has a width in the circumferential direction of the wheel 11 to allow a seedling with its axis in the direction of the slot 17a to pass through the slot 17a without damage, and each slot 17a has its leading edge (in the direction of rotation of the wheel 11) spaced from its associated bottom plate 18 and its trailing edge (in the direction of rotation of the wheel 11) adjacent its associated top plate 19. Thus, the leading edge of each slot 17a is spaced from the associated bottom plate 18, defining a side wall 17b for each planting chamber 20, and the trailing regions 17c of each side wall 17b are deflected outwardly from the plane of the disc-like member 17 so as to lie at an angle between 40 and 50° to the plane of said member 17. Thus, the leading edge of each slot 17a lies outwardly, with respect to the wheel 11, from the trailing edge of the slot 17a.

The wheel 11 is supported by a shaft 21, rotatable in bearings supported by the machine frame (not shown), the shaft 21 is secured for rotation with the wheel 11, and said shaft 21 extends to a gearbox 22 and comprises the imput drive shaft for gearbox 22. An output shaft 23 from gearbox 22 constitutes the drive shaft for a conveyor, generally indicated by reference numeral 25, the upper run of which lies substantially horizontal at or near the horizontal plane passing through to rotational axis of the wheel 11 and forward of the said axis XX.  Thus, conveyor 25 rotates anti-clockwise, as viewed in Fig. 3, so that the displacement of the upper run of the said conveyor 25 is towards the wheel 11 and, by virtue of the direct drive for wheel 11, the conveyor rotates at a speed directly related to the rotational speed of the wheel 11.

As will be seen from Figs. 2 and 3 an arcuate conveyor 26 extends from a supporting roller 27 to a supporting roller 28, the axes of rollers 27 and 28 lie parallel to the axis XX, the roller 27 has its axis substantially on or adjacent the horizontal plane passing through axis XX, forward of the wheel 11, and the roller 28 lies substantially close to the vertical plane passing through the axis XX.  The run 26a of conveyor 26 lies in contact with the periphery of the wheel 11, whereupon said run 26a is displaceable by the wheel 11 at a speed substantially identical to the peripheral speed of wheel 11 and a jockey roller 29 retains the tension in the conveyor band 26.

The apparatus described above operates as follows:-

When the apparatus is advancing in the direction of planting B the wheel 11 rotates clockwise (as viewed in Fig. 2) so that the slots 17a in disc-like member 17 pass successively through the plane of the upper run of conveyor 25, seedlings S to be planted are placed on the upper run of conveyor 25, by hand or by mechanical means, so that the seedlings lie in side-by-side relationship with their axes transverse to the direction of displacement of the upper run of conveyor 25, and via gearbox 22, the conveyor 25 is displaced at such speed as to deliver a seedling S to each slot 17a passing through the plane of the upper run of conveyor 25.

Thus, as the leading edge of each slot 17a (in the direction of rotation of wheel 11) passes through the plane of the upper run of conveyor 25 a seedling S falls from the conveyor 25, the seedling S is arrested by the inclined regions 17c of the side wall 17b of the relevant planting chamber 20 which has passed through the plane of the conveyor 25, and said deflected regions 17c direct the seedling A through the slot 17a and into the planting chamber 20.  As will be seen from Fig. 3, the seedlings S, when wholly within the planting chamber is identified by reference
S1 and, as the seedling S1 lies wholly within the chamber 20 there
is no danger of the seedling S1 projecting from the slot 17a and
being damaged by the trailing edge of the slot 17a as said
trailing edge passes conveyor 25. It should also be observed
that whilst the edge of the slot 17a presented by the wall region
17c can closely approach the conveyor 25 the upper edge of the
slot 17a is well spaced from the conveyor 25 and, thereby, is a
seedling with an exceptionally large foliage projects from the slot
17a the foliage will not be damaged by the trailing edge of the
slot 17a.

A seedling is thus deposited in each chamber 20 passing
through the plane of conveyor 25 with its block towards the periphery of the wheel 11 and its foliage towards the axis XX. As the
wheel 11 continues to rotate so that the axis of each planting
chamber 20 traversing through the forward lower quadrant of wheel
11 approaches the vertical seedling S1 in each such chamber 20
slides down the chamber 20, towards the peripheral opening thereof,
until its block rests on the run 26a of the conveyor 26 and, thereafter, the conveyor 26 retains the seedling S1 in the chamber 20
whilst the wheel 11 continues to rotate.

As each planting chamber 20 approaches the vertical position,
and at which stage the relative displacement of the periphery of
the wheel at the planting chamber 20 is very small relative to the
ground, the block of the seedling S1 passes rearwardly of the rearmost regions of the run 26a of conveyor 26, whereupon the seedling
S1 falls downwardly until its block rests on the bottom of the
furrow 13 and, as the relative speed of the plates 18 and 19
relative to the ground is small, the seedling S1 is retained upright
within the planting chamber 20.

Thus, by use of the conveyor 26, the seedling S1 will be
delivered to the ground at the desired spacing along the row and,
by virtue of the construction of each planting chamber, each
seedling delivered to the ground is delivered in erect position
and is supported, at least initially, in its erect position by the
walls defining the planting chamber 20.

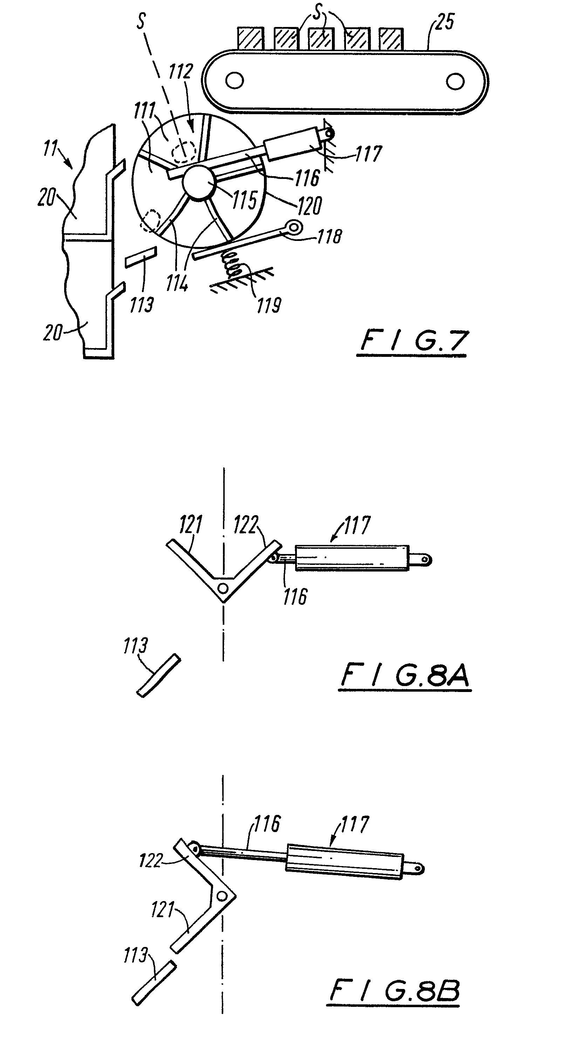

Whilst the plough 12 illustrated in Fig. 1 shows a conventional plough for forming the furrow 13, Figs. 4 and 5 show a plough proposed by the present invention and wherein parallel side wall extensions 30 and 31 extend rearwardly from the plough 12 to pass one on either side of the wheel 11 and said wall extensions 30 and 31 terminate just rearwardly of the vertical plane passing through the axis XX.    In practice, as the plough 12 cuts the furrow 13, the soil displaced by the plough 12 is banked against the extensions 30 and 31 and is supported by said extensions until, at the trailing edges of said extension, the said banked soil, deprived of the support afforded by extensions 30 and 31, collapse inwardly with respect to furrow 13 and, being worked by the regions of the discs 16 and 17 rearwardly of the vertical plane passing through axis XX, the soil trickles inwardly to partially fill the furrow 13 and, thereby, said soil is loosely displaced about each block of each seedling S delivered to the furrow 13 and said soil supports each seedling S in its erect position as and until the following ploughs 14 and 15 complete the filling of the furrow 13 and pack the soil about the block of the seedlings.

Thus, by the use of the apparatus described above the seedlings S are delivered individually to the planting chamber 20, the seedlings S are retained with the chamber 20 and are released successively at the desired spacings and delivered to the furrow in an erect condition and the seedlings S are afforded support in their erect condition and are loosely packed with soil so as to be self supporting until packed by the following ploughs 14 and 15 so that all the objects of transplanting recited hereinbefore are met.

In the example illustrated in Fig. 7 the conveyor 25 delivers seedlings S successively to chambers 111 in a rotary member 112, the rotary member 112 is rotated in timed relationship with the planting wheel 11 and each seedling S falling from a chamber 111 drops onto a dead plate 113 from which it is deflected into a planting chamber 20 in planting wheel 11.

The rotary member 112 illustrated presents five chambers 111, defined by five radial vanes 114, and instead of being rotated continuously the rotary member 112 is indexed so that, during each indexing movement, the member 112 rotates through an angle of 72°.

The member 112 is indexed by a gear wheel 115 connected via a pawl and ratchet wheel (not shown) so as to rotate the rotary member 112 only in the anti-clockwise direction (as viewed in Fig. 7) and the gear wheel 115 is rotated by a rack on the connecting rod 116 of a pneumatic piston and cylinder arrangement, generally indicated by reference numeral 117, the cylindrical arrangement 117 being conveniently anchored to a fixed part of the machine frame by a pivotal connection. A pivotal lever 118 is loaded by a spring 119 against a friction drum 120 to prevent rotation of member 112 other than under positive drive, in the anti-clockwise direction, from the gear wheel 115 through the pawl and ratchet wheel.

When the piston and cylinder arrangement 117 is in its full contracted condition a chamber 111 lies directly beneath, and is open to receive a seedling S discharged from conveyor 25 and when the piston and cylinder arrangement 117 is expanded, the member 112 is rotated anti-clockwise through 70° whereupon an empty chamber 111 is located beneath the conveyor 25, to receive the next seedling S to be discharged therefrom, and the charged chamber is in such position that the seedling therein falls readily under gravity onto the dead plate 113 and is deflected thereby into a planting chamber 20.

It will be appreciated that the pneumatic piston and cylinder arrangement 117 will be actuated to index the rotary member 112 in direct relationship with the rotation of the planting wheel 11 so that at each delivery of a seedling S there will always be a planting chamber 20 of wheel 11 correctly located to receive the seedling and, conveniently, the control valve for actuating the piston and cylinder arrangement may be directly operated by the planting wheel.

The arrangement illustrated in Figs. 8A and 8B shows an alternative for the rotary member 112 in Fig. 7 and whereby the said rotary member 112 is replaced by an angle member, defined by two side elements 121, 122 at right angles, pivotal about an axis on or adjacent the intersection of the planes of elements 121, 122. In this case the piston rod 116 of the piston and cylinder arrangement 117 is pivotally connected to the element 122 so that, when the arrangement 117 is contracted, the channel defined by elements 121, 122 is upwardly opening to receive a seedling S from conveyor 25 (Fig. 8A) and when arrangement 117 is extended the member 121, 122 is rocked anti-clockwise about its pivotal axis to discharge the seedlings S onto plate 113 (Fig.8B). Thus, by oscillating the member 121, 122 the seedlings S are positively displaced in timed relationship with the planting wheel 11 to ensure delivery to the planting chamber 20 of wheel 11.

The conveyor 25 may, for both the Fig. 7 and Fig. 8A and 8B embodiments, be displaced at uniform speed but preferably for such embodiments the conveyor 25 is indexed during dwell periods of the member 112 or member 121, 122, to deliver the seedlings S thereto.

Independent side ploughs may be substituted for the extensions 30 and 31, the wheel 11 may be of different construction, subject to defining the planting chambers 20, and the means for retaining the seedlings S in the chambers 20 may be other than is illustrated; and such modifications and variations lie within the scope of this invention.

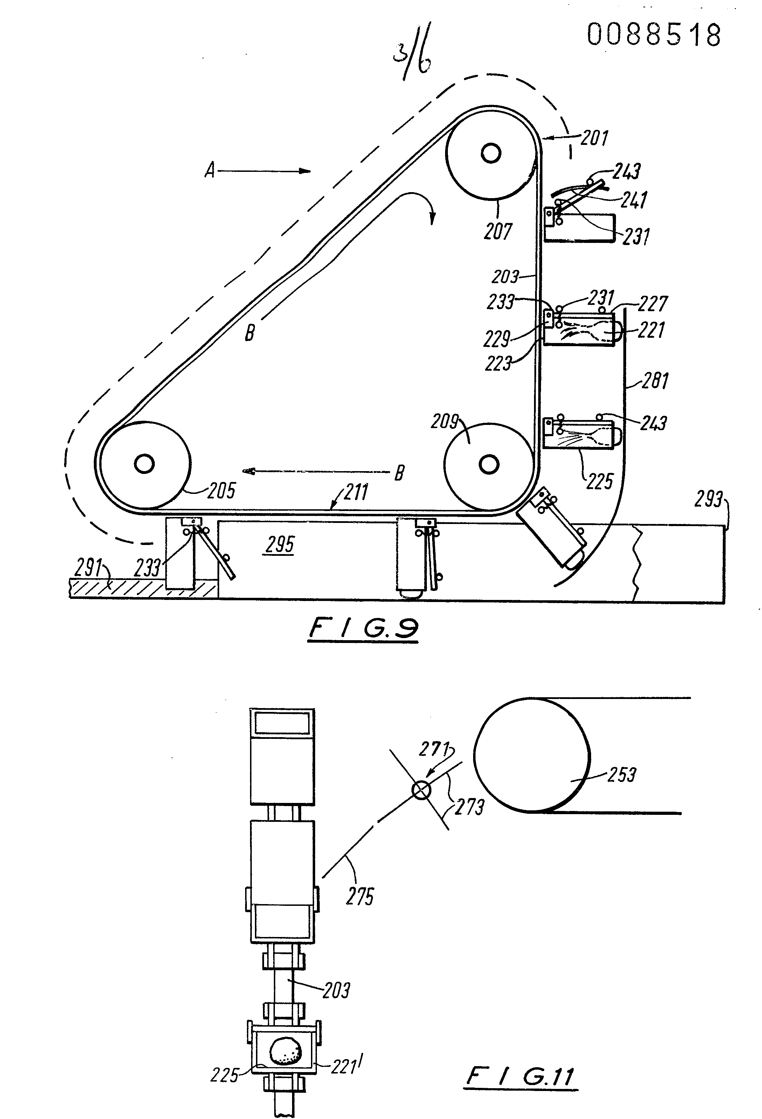

Referring now to Fig. 9 of the accompanying drawings, the illustrated apparatus is intended to be drawn over the ground in the direction indicated by arrow "A" in that Figure. The apparatus comprises a conveyor, generally indicated at 201; the conveyor comprising an endless chain 203 trained around three sprockets 205, 207 and 209 to provide a bottommost run 211 lying substantially parallel with the ground over which the apparatus is drawn - i.e. by a tractor, and, in advance of the bottommost run in relation to the direction of rotation of the conveyor indicated by arrow "B" in Fig. 9, a run 213 passing substantially vertically; the two runs 211 and 213 being connected by a third run 215 passing obliquely between the pulleys 205 and 207. One on the pulleys is driven by a means not shown. Attached to the chain at predetermined intervals therearound, are a plurality of plant supports. Each plant support comprises a channel 221 of general "U" shape in cross section providing an end wall 223 having holes (not shown) therein by which the support is secured by a suitable clamp (not shown) to the chain so that the support extends in the general plane of the conveyor, being the vertical plane including the three pulleys 205, 207 and 209 as shown in Fig. 9, and so that the floor 225 of the support lies substantially horizontally when in the vertical run of the conveyor and lies substantially vertical when in the bottommost run of the conveyor. Each support also comprises a cover or lid 227 to close the mouth of the channel of the support; the lid being pivoted adjacent its rear end between a pair of brackets 229 made integral with the channel of the support. The lid on the uppersurface thereof has a bar 231 fastened thereto. The bar extends transversely of the lid and projects from the side thereof; and the lateral wall of the channel on that side of the support bears a peg, the bar and the peg serving as anchorages for the respective ends of a coil spring 233 by which the lid is biased to the closed position.

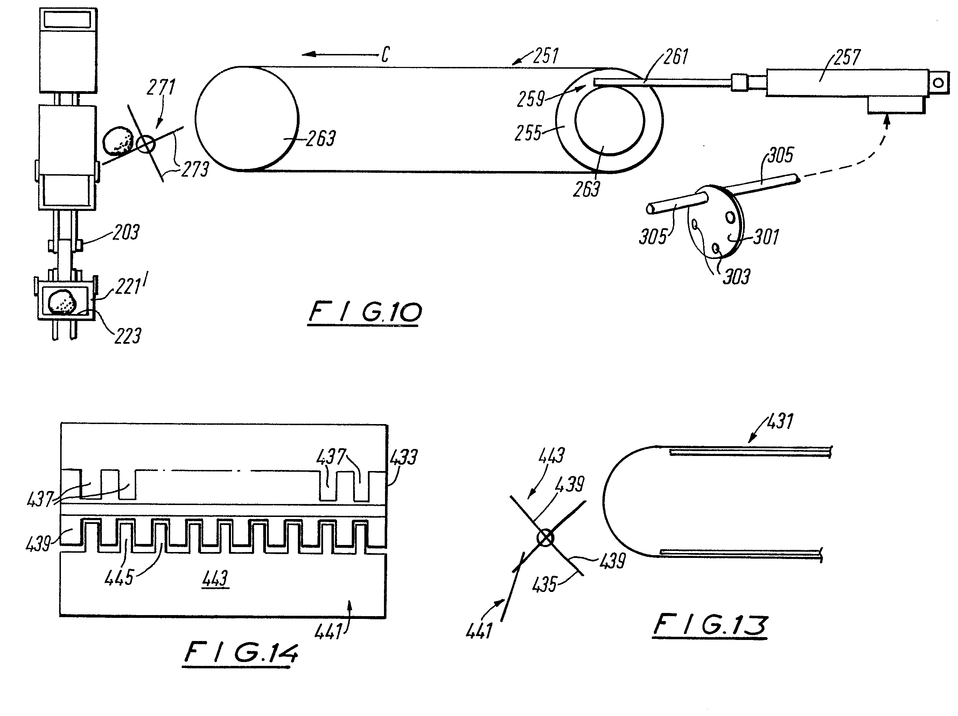

The apparatus also comprises a cam surface 241, and the lid of each support has a further bar 243 secured to the supper surface thereof to pass transversely of the lid and project from the lateral side thereof opposite to that from which the bar 231 projects; the cam surface being located so that the bar 243 of a support engages and runs on the cam surface as the support is passing down the vertical run of the conveyor to cause the lid to be lifted to a substantially upright position and held for a brief interval in that position before the bar 243 leaves the cam surface to permit the lid to move back to the closed position under the influence of the spring bias. At the location at which a support has the lid thereof raised to the substantially upright position, a feed means is arranged (shown only in Fig. 10) to feed an individual seedling to the support. The feed means comprises an endless band conveyor, generally indicated at 251, having two sprockets 253 and 255 one of which 255 is intermittently driven by a pneumatic piston and cylinder unit 257 acting through a rack and pinion drive 259 comprising a rack 261 and a pinion 263.

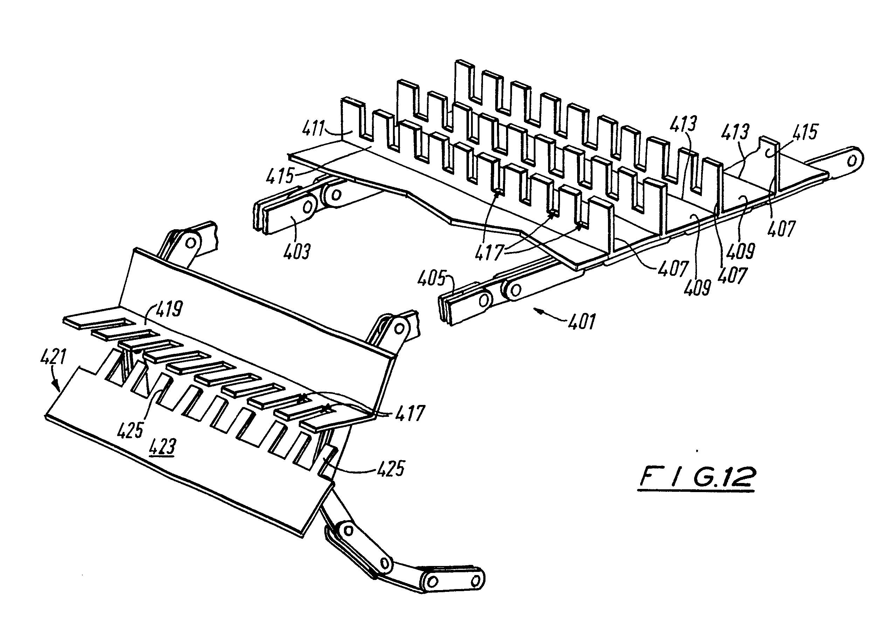

Seedlings are fed individually to the endless band conveyor, either manually or mechanically, to lie at spaced intervals on the conveyor and so that on operation of the piston and cylinder unit to drive the conveyor in the direction indicated by the arrow "C" in Fig. 10, a seedling is deposited off the end of the conveyor remote from the rack and pinion drive. For the purpose of guiding a seedling deposited from the feed conveyor into the channel of a seedling support, the feed means also comprises a paddle wheel generally indicated at 271. In this instance, the paddle wheel is shown as comprising four paddles 273 but, in practice, the number may be varied according to need. The paddle wheel is driven from the piston and cylinder unit by a drive means (not shown) so as to rotate at the same time as the conveyor is driven whereby a seedling previously deposited on the paddle wheel to lie between two adjacent paddles thereof, is deposited into the channel of a seedling support while a further seedling is deposited from the feed conveyor into the paddle wheel to lie between the next following adjacent paddles thereof. The seedlings are arranged on the feed conveyor so that they are deposited in the channel of a seedling support with the head of the seedling lying adjacent the conveyor 201 and with the base of the seedling projecting somewhat from the end of the channel remote from the conveyor 201. It may be desirable in practice to provide a further guide member for the seedlings being deposited into the channel of a seedling support to make certain that it is positively guided into the channel. The further guide member may take the form of a flat plate 275 (see Fig. 11) arranged adjacent the paddle wheel to receive a seedling deposited therefrom and guide the seedling into the channel of the seedling support. In this case, a greater spacing would be needed between the paddle wheel and the conveyor 201.

Immediately following the deposition of a seedling into a seedling support, the bar 243 of the lid of the support leaves contact with the cam surface 241 and the lid of the support closes. To prevent a seedling from being dislodged from a seedling support when on the vertical run of the conveyor, the apparatus further comprises a skid plate 281 extending from the location at which the seedling has been received in the channel of a support to a position terminating just short of the bottommost run of the conveyor; the skid plate being spaced from the conveyor 201, so that the projecting base of the seedling makes contact therewith and "skids" thereon should the seedling move in the direction outwardly of the conveyor. Alternatively, the underside of each lid of a support may have secured thereto a resilient finger (not shown) for instance, made of strip metal, so that,when the lid is closed, the end of the finger lies firmly on the base of the seedling to keep it in place.

The conveyor 201 is rotated at a speed such that the bottom run thereof moves in the direction of the arrow "B" at the same rate at which the apparatus is being drawn in the direction of the arrow "A" over the ground in which the seedlings are to be planted. As a result, the support is stationary in relation to the ground when on the bottommost run of the conveyor. When in this position, the support holds the seedling vertically with the head thereof uppermost and with the base thereof in contact with the ground. The ground in which the seedlings are planted lies in a furrow 291 dug by the plough 293, which may be carried by the tractor. The plough may be one of the kind commonly used for digging a furrow, but it is preferred that it is one such as described in copending British patent application No. 8118571, so formed that the soil thrown to each side of the furrow by the plough would fall back into the furrow unless prevented from doing so, with the plough comprising opposed lateral walls, one of which 295 is seen in Fig. 9, to prevent the soil from falling back into the furrow until the seedling carried in the seedling support has been brought round to the bottommost run of the conveyor and is released from such a support. By this means, immediately the seedling is no longer supported by the seedling support, soil is deposited around the base thereof to help stabilize the seedling and prevent it from falling over. To ensure release of a seedling from a support, the apparatus comprises a further cam surface (not shown) partly to open the lid of a support as it approaches the trailing end of the bottommost run of the conveyor. This prevents any seedling being held in a support due to trapping of its foliage between the lid and the channel of the support.

For the purpose of controlling operation of the piston and cylinder unit of the feed conveyor drive, the conveyor 201 drives a disc 301 comprising a plurality of holes 303, and the disc is arranged to interrupt an air line 305 so that the disc only permits the passage of air through the air line when one of the holes is aligned with the facing ends of the interrupted line. The disc is driven directly or indirectly from the conveyor 201 and the passage of air through the air line in the above described manner on rotation of the disc provides a signal to operate the piston and cylinder unit.

The seedlings need to be planted with a prescribed separation between the seedling supports on the conveyor 201 is chosen in the light of the expected rate of planting of the seedlings i.e. in view of the expected forward speed of the apparatus, so that the seedlings are planted with the prescribed separation. As is usual with apparatus of the kind to which the present invention relates, the apparatus of the present invention may also comprise trailing plough members (not shown) firmly to urge the displaced soil back into the furrow to cover the base of the planted seedlings.

In the illustrated apparatus, the channel and lid of each seedling support form a protective enclosure for the seedling until it has been deposited on the ground and soil displaced around its base to assist in keeping it upright. This is of particular importance should planting take place under windy conditions since an unsupported seedling is easily blown over. The lid of the support is not essential for this purpose, but the support would afford less protection without it.

Referring now to Fig. 12, the planting apparatus is one of the kind defined and comprises feed means for individually feeding plant seedlings each with its own associated block of nutrient material to the rotating member (not shown) of the apparatus. The feed means comprises a conveyor, generally indicated at 401, in this instance, constituted by a parallel chain conveyor, the two parallel chains 403, 405 of which are trained arouns respective sets of sprockets (not shown). To the chains are secured a plurality of seedling supports 407 each fastened to the chains of the conveyor to pass transversely thereacross so that a seedling deposited on a seedling support lies generally parallel with the axis of rotation of the sprockets of the conveyor. Each seedling support is an elongate member of a general "L" shape in cross-section to provide two limbs 409, 411, the limb 409 of which is fastened to the conveyor chains to leave the limb 411 substantially upright when the support is being carried on the top run of the conveyor and to face in the direction of rotation of the conveyor. The supports are spaced so that the rearward edge 413 of each limb 409 butts on the forward face 415 of the next following support. As a result, each two adjacent supports form a seedling receiving channel structure of a general "U" shape in cross-section. The limb 411 of each support is perforated by a series of slots 417 passing into the limb from the upper edge thereof and extending over a major part of the height of the limb. The face 419 of each limb, being the rearward face when the support is on the top run of the conveyor, constitutes a part of the transfer arrangement of the apparatus and, in particular, a seedling support transfer surface, as will be more fully explained hereinbelow.

The transfer arrangement further comprises another part 421, which is fixedly mounted adjacent the discharge end of the conveyor. The part 421 is a generally flat member providing an inclined guide surface 423 and a plurality of elongate extensions or fingers 425 pointing generally in the direction of the conveyor. When a seedling support on the top run of the conveyor is brought round to the discharge end thereof the two limbs of the support continuously change their angular orientation so that a seedling carried by the support comes to rest on the face 419 of the limb 411 of the support. As the support is being taken round the discharge end of the conveyor, the inclination of that face continuously increases until it reaches an angle at which the seedling tends to roll off therefrom; the part 421 is stationed so that as the limb 411 assumes that orientation, the fingers of the part 421 begin to pass through the slots 417 in the limb 411. On continued rotation of the support, the fingers completely pass through the slots and cause the seedling to roll down the face 423 of the part 421 to fall thereoff onto a plant support of the rotating member of the apparatus. The angle of inclination of part 421 is chosen so that a seedling received on the face 423 will roll theredown regardless of its condition.

Because of the fact that the seedling is positively moved from the transfer surface of the seedling support, the path length of the face 423 of the member 421 in the direction of movement of the seedling can be kept to a minimum and this in itself provides less chance that the transfer of a seedling will not be properly effected. Again, because the transfer surface of a seedling support does not itself provide a guide surface for directing a seedling onto a plant support of the rotating member, it too need only have the dimension in the direction of movement of the seedling in transfer, sufficient simply to support the seedling before the transfer operation is effected and this also facilitates the transfer of the seedling.

Although in the above described arrangement, a guide surface 423 is shown integral with the fingers, this need not be so and the guide surface may be provided on a separate member.

As will be evident from the above, each of the seedling supports 407 in turn and the member 421 form relatively moving parts with the support 407 providing a seedling support transfer surface 419 perforated to be able to receive therethrough the other of the two relatively moving parts so that the latter dislodges the seedling from the transfer surface.

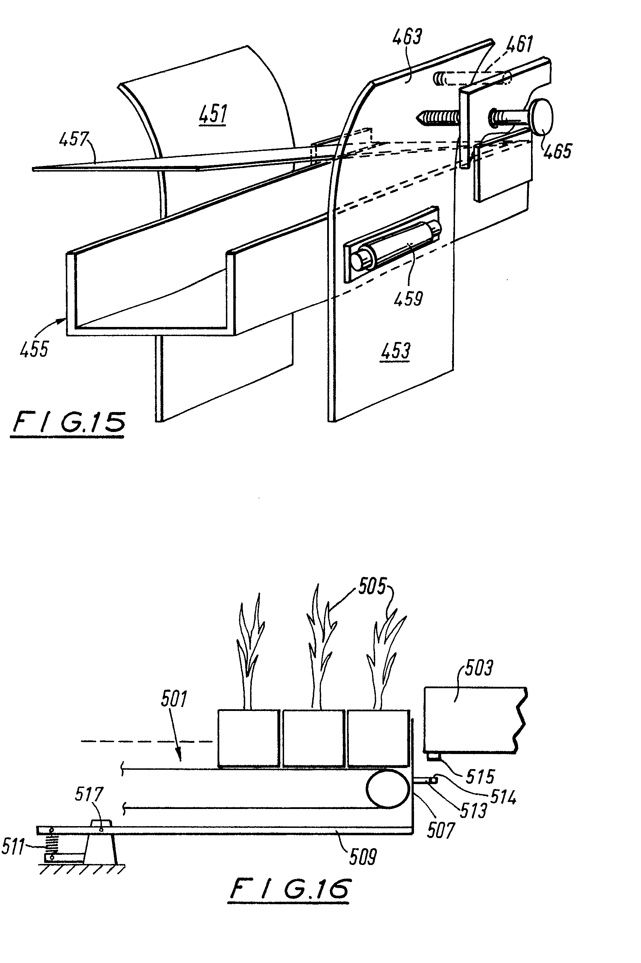

In the further form of the invention shown in Figs. 13 and 14, the conveyor 431 of the apparatus is an endless band conveyor on which seedlings are laid transversely thereof and spaced apart at the distance required by the chosen feed rate. At the discharge end of the conveyor, a paddle wheel 433 is provided comprising a plurality of paddles or vanes 435 each two adjacent ones of which form a channel of a general "V" shape in cross-section to receive therein a seedling deposited from the conveyor. Each vane is perforated by a plurality of slots 437 leading into the vane from the outermost edge thereof and passing over a major part of the radial length of the vane. The face 439 of each vane constitutes a transfer surface of the transfer arrangement; the transfer arrangement further comprising another part 441 similar to the part 421 of the above-described embodiment, that is, a generally flat member providing a guide surface 443 and a plurality of elongate members or fingers 445 to pass into the slots of a vane of the paddle wheel when the vane reaches an angular position at which a seedling supported thereon tends to roll off, to dislodge the seedling from the transfer surface in generally the same manner as a part 421 of the first described embodiment.

In the embodiment of Figures 9 to 11, lidded channel members are employed on the rotating member to receive seedlings from the transfer arrangement; the lids of the channels being resiliently biased to the closed position. It has been found that in use of that embodiment, because of the resilient bias under which the lids close, they tend on closure to vibrate the channels to tend to cause a seedling deposited in the channel to become displaced. To overcome this possibility the planting apparatus of that embodiment may be provided with means for steadying a channel at the instant the lid is to close so as to prevent vibration thereof and any tendency for the seedling to be displaced. The means may take the form of friction members 451, 453 (Fig. 15) mounted on fixed parts of the apparatus to lie one each side of a seedling receiving channel 455 when the channel is in the position at which the lid 457 thereof is about to close so that at the instant the lid actually closes, the exterior surface of the channel makes contact with the friction members whereby the latter steady the channel and prevent vibration thereof due to impact on closure. To avoid abrupt braking of a channel, at least one of the plates 453 is made resiliently deflectable so as to increase the separation from the opposing friction member on contact of the channel with the two friction members. For this purpose, the member 453 is pivotally mounted by a pivot connection 459 to a fixed part of the apparatus so that it can turn about an axis parallel with that of the channel; the pivot being formed substantially midway between the top and bottom edges of the member 453, and the plate is biased by a spring 461 secured at one end to the face 463 of the member 453 and at the other end to a fixed part of the apparatus so that the lower portion of plate 453 can be deflected outwardly, that is, away from the lower portion of member 451, against the bias of the spring on contact of the channel with the two friction members. To prevent the member 453 being drawn too far clockwise, as shown in Fig. 15, by the spring 461, the member 453 may be stopped by means of a bolt 465 mounted in a screw-threaded bore in a fixed part of the apparatus and abutting against the face 463 of the member 453; the position of the bolt determining the degree of clockwise rotation of the member 453 under the influence of the spring 461.

Referring now to Fig. 16, an arrangement is shown for end feeding of a plant supporting channel particularly of a planting conveyor of the kind illustrated in and described with reference to Fig. 9. The feed arrangement of Fig. 16 comprises a feed conveyor 501 disposed with its longitudinal axis lying in the general plane of the planting conveyor (not shown in Fig. 16) and so that the discharge end of the feed conveyor faces and lies adjacent to the open end of a planting channel 503 when the latter arrives at the position at which it is to be loaded with a seedling. The most convenient form of the seedlings for use in this arrangement consists of the one produced from a large block of nutrient material planted with a plurality of seeds and then, when the seeds sprout, cut up into portions each containing one seedling. This method of producing the seedlings results in blocks, carrying an individual seedling, of generally straight-sided form which have less tendency to fall over than blocks having tapered sides. The seedlings designated 505 in Fig. 16 are fed along the feed conveyor to the discharge end in contact with one another and the line of seedlings thus formed is stopped at the discharge end by a gate 507 mounted on a pivoted arm 509 spring loaded by tension spring 511 normally to position the gate as shown in Fig. 16 to stop the line of seedlings. The gate also has secured thereto at one lateral side thereof a finger 513 having a turned in end part 514 to make contact with a striker 515, secured to the underside of each planting channel, as the channel descends on the vertical run of the planting conveyor so that on continued movement of the planting channel, the arm 509 is pivoted against the spring bias to lower the gate below the level of the top run of the feed conveyor. At this stage, the open top of the planting channel is also belowe the top run of the conveyor and is positioned to receive a seedling therein. The feed conveyor operates continuously and, as a result, when the gate is lowered as described above, the seedling is tipped over the discharge end bodily and is deposited in the planting channel. It will be understood in this connection that the seedling is positively urged over the discharge end of the conveyor. It has been found that by this means a seedling can be deposited in a planting channel with surprising precision and, as required, with the head adjacent the planting conveyor and the block adjacent the open end of the planting channel.

Due to the length of the arm 509 between the pivot 517 and the gate, the turned-in end 514 of finger 513 undergoes only a small displacement laterally in swinging of arm 509 and the striker 515 is dimensioned in that direction accordingly so that immediately a seedling has been deposited in a planting channel, the striker loses contact with finger 513 and the gate returns under the spring tension again to its stop position. The speed of the conveyor is set so that the gate returns to the stop position before the next seedling on the feed conveyor reaches the gate.

0088518

CLAIMS.

1. Planting apparatus of the type defined comprising a planting device in the form of a rotatable member rotated on forward movement of the apparatus and having means thereon for accepting seedlings from a feed means for the seedling so as to deposit the seedlings upright on the ground at intervals as the rotatable member rotates; characterised in that said means for accepting seedlings (5) comprises a plurality of seedling support channels (16-19; 221) secured to the rotatable member (11, 203) at angularly displaced positions thereon to lie with their longitudinal axes substantially normal to the axis of rotation of the rotatable member and having in the direction of their longitundinal axes access (17, 227) to the channels for seedlings such that each channel can receive a seedling therein by orientation of the seedling; said feed means being such as to be able to present seedlings to the rotatable member in the requisite orientation.

2. Apparatus as claimed in claim 1, wherein said feed means (25, 251, 431, 401, 501) feeds the seedlings to be substantially parallel with the longitudinal axis of the channel to enter the seedling therein from a lateral side of the channel remote from the feed means.

3. Apparatus as claimed in claim 1, wherein each of said channels is open at a side thereof which lies uppermost when the channel is postioned to receive a seedling and is open at the radially outermost end thereof; and wherein said feed means (251) feeds the seedlings in an upright position at the open end of a channel which is to receive the seedling and comprises means (501) for tipping over the seedling to deposit it longitudinally in the channel through said open side thereof.

4. Apparatus as claimed in claim 1 or 2 wherein said rotatable member is a wheel (11); and said channels are such that the bases (18) thereof lie in planes parallel to or in a diametrical plane of the wheel and extend to the periphery of the wheel, the channels being open at the periphery of the wheel, the side edge of each channel remote from the wheel having its upper regions (17c), when the channel is substantially horizontal with the base thereof directed downwardly, upwardly and outwardly inclined away from the wheel, and the feed means is such that a seedling is delivered to a planting channel by deposition therein so as to engage and to be deflected by the upper inclined region of the side wall into the planting channel.

5. Apparatus according to claim 1 or 2, wherein said rotatable member is a wheel (11) and the channels comprise a plurality of box-like planting chambers (20), the axes of which extend generally radially from the rotational axis of the planting wheel and lie in a common plane parallel to the intended direction of planting; each chamber being open at the periphery of the wheel and said access therein comprising a slot-like opening (17a) in that side of a chamber receiving a seedling, which slot-like opening, when in the forward part of the planting wheel, is spaced above the bottom (18) of its associated planting chamber, the upper regions (17c) of that side wall of each planting chamber, from the bottom of the chamber towards the adjacent edge of the associated slot when in the forward part of the wheel, being deflected away from the wheel; and the feed means being such that each seedling in delivery to a chamber is deflected by said deflected upper wall regions into the planting chamber.

6. Planting apparatus of the type defined comprising a rotatable member rotated on forward movement of the apparatus and having means thereon for accepting seedlings from a feed means for the seedling so as to deposit the seedlings upright on the ground at intervals as the rotatable member rotates; characterised in that the rotatable member is an endless conveyor (201) providing a lowermost run (211) to lie, in use of the device, substantially parallel with the ground, means for rotating the conveyor so that the lowermost run passes in the opposite direction to that in which, in use, the device is to be drawn over the ground; said seedling supports (221) being mounted on the conveyor so as to be spaced apart thereon at the spacing required between plants in a row to be planted; the supports (221) being such as to provide a surface (225) extending from the conveyor in the general plane thereof and to lie substantially horizontally at a predetermined position before reaching the lowermost run of the conveyor and to lie substantially vertical when being carried on the lowermost run of the conveyor, and the feed means (251) feeding seedlings onto said surface of a support at said predetermined position to lie substantially in the general plane of the conveyor with the head of the seedling adjacent the conveyor so that when the seedling is brought to the lowermost run of the conveyor it stands substantially vertical with its head uppermost.

7.      Apparatus as claimed in claim 6, wherein means are provided for retaining the seedling on said surface of a support until the latter has been brought to the lowermost run of the conveyor.

8.      Apparatus as claimed in claim 6 or 7, wherein the seedling supports are such as to leave the base of the seedling exposed and extending from said surface of the support.

9.      Apparatus as claimed in any of claims 6 to 8, wherein said surface (225) of a support is provided by a channel (221) of a general U-shape in section and having means at one end for securing the channel to the conveyor, and each support comprises a further member, or lid (227), to close the channel at the mouth thereof; the lid being resiliently biased to the closed position and comprising a member (243) to strike an abutment (241) to move the lid to open the channel when a seedling is to be deposited therein; and the abutment surface (241) being arranged so that once the seedling is deposited in the channel, the said member of the lid leaves contact with the abutment surface to permit the lid again to close.

10. Apparatus as claimed in claim 9, wherein a further abutment surface is provided at the lower run of the conveyor partly to open the lid of a support to ensure that a seedling may fall freely out of the channel.

11. Apparatus as claimed in claim 1, wherein the feed means comprises a conveyor (401, 431) to receive seedlings thereon remote from one end thereof, and transfer means (419, 423, 439, 441) for receiving seedlings from that end of the conveyor and transferring them to the rotatable member, wherein the transfer means comprises an arrangement of relatively moving parts (419, 423, 439, 441), one part providing a seedling support transfer surface (419, 439) the surface being perforated to be able to receive therethrough another of the relatively moving parts (423, 441) so that the latter dislodges or assists in dislodging any seedling being carried on the surface, thereby to assist transfer of the seedling to a plant support of the rotating member.

12. Apparatus as claimed in claim 11, wherein the one part (413) of the relatively moving parts is replicated and the one parts thus provided are arranged

ly on the conveyor each to receive an individual seeding, and the other part consists of a stationary member (423) located adjacent the discharge end of the conveyor and positioned so that it acts to dislodge or assist the dislodgement of the seedling of the seedling from the transfer surface when the transfer surface is angled correctly to deposit the seedling onto a plant support of the rotating member.

13. Apparatus as claimed in claim 11 or 12, wherein the perforation of the one part of the relatively moving parts takes the form of slots (417), and each slot leads in from the edge of the transfer surface, said other part comprising elongate members of fingers arranged to pass into the slots to act on a seedling carried on the transfer surface.

14. Apparatus as claimed in claim 11, wherein the one part (439) of the relatively moving parts is replicated and the plurality of the one parts thus provided is in the form of a paddle wheel (443) rotated in synchronism with the conveyor with each paddle or vane of the paddle wheel constituting a transfer surface, and the other part (441) of the relatively moving parts is stationed adjacent to the paddle wheel and somewhat below the horizontal diametrical plane thereof at the side of the conveyor.

15. Apparatus as claimed in any of the preceding claims, wherein there is provided an element (26, 281) adjacent the periphery of the rotatable member at the lower forward quadrant thereof in the direction of planting, the element being arranged to prevent the release of seedlings from each channel in that quadrant as and until the axis of each channel is vertical.

0088518

FIG.1

FIG.2

FIG.3

FIG.4

FIG.5

FIG.6

FIG.7

FIG.8A

FIG.8B

0088518

_F I G.9_

_F I G.11_

FIG.10

FIG.13

FIG.14

411

415

403

417

413   413   415

407

409   407

405   407

409

401

419

421

425   417

423

425

F I G.12

5/6

0088518

_F I G.15_

_F I G.16_

0088518

European Patent Office

**EUROPEAN SEARCH REPORT**

Application number

EP 83 30 0610

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | AU-B- 486 732 (K.K. CIRCLE TEKKOJO) <br><br> * Page 9, line 6 - page 12, line 9; figures 1-5 * | 1,2,4, 5,11, 14 | A 01 C 11/02 |
| A | GB-A- 886 146 (P.G. STOCK) <br> * Page 2, lines 21-55; figures 1-4 * | 1,2 | |
| A | DE-C- 849 197 (BECHE & GROHS GMBH) <br> * Page 3, lines 20-43; figures 6, 7 * | 1,6,15 | |
| A | US-A-3 103 186 (J.F. SAIFUKU) <br> * Claim 1; figures 1-3 * | 1,6 | |
| A | US-A-2 609 767 (A.G. TAPP et al.) <br> * Columns 1, 2; figures 1-5 * | 1,6 | TECHNICAL FIELDS SEARCHED (Int. Cl. 3) <br><br> A 01 C 11/00 |
| A | DE-C- 928 130 (A.G. WITTE) <br> * Page 5, lines 22-44; figures 8, 9, 12, 13 * | 1,15 | |

The present search report has been drawn up for all claims

| Place of search <br> BERLIN | Date of completion of the search <br> 04-05-1983 | Examiner <br> SCHOFER G |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82